Europäisches Patentamt

European Patent Office

Office européen des brevets

(19)

(11) **EP 0 454 125 B1**

(12) **EUROPEAN PATENT SPECIFICATION**

(45) Date of publication and mention
of the grant of the patent:
**17.07.1996 Bulletin 1996/29**

(51) Int Cl.⁶: **G09G 1/00**, G09G 5/24

(21) Application number: **91106710.6**

(22) Date of filing: **25.04.1991**

(54) **Method of producing characters and figures using computer**

Verfahren zum Erzeugen von Zeichen und Figuren mit einem Rechner

Méthode pour produire des caractères et figures utilisant un ordinateur

(84) Designated Contracting States:
**DE GB**

(30) Priority: **25.04.1990 JP 111069/90**
**02.05.1990 JP 115965/90**
**29.06.1990 JP 173823/90**

(43) Date of publication of application:
**30.10.1991 Bulletin 1991/44**

(73) Proprietor: **SHARP KABUSHIKI KAISHA**
**Osaka-shi Osaka-fu (JP)**

(72) Inventors:
• **Imanaka, Takao**
**Nara-shi, Nara-ken (JP)**
• **Kugai, Minoru**
**Midori-ku, Yokohama-shi, Kanagawa-ken (JP)**
• **Hayasaki, Hideto**
**Nara-shi, Nara-ken (JP)**
• **Kurihara, Toru**
**Yao-shi, Osaka-fu (JP)**
• **Kotani, Akio**
**Nishinari-ku, Osaka-shi, Osaka-fu (JP)**

(74) Representative:
**TER MEER - MÜLLER - STEINMEISTER &**
**PARTNER**
**Mauerkircherstrasse 45**
**81679 München (DE)**

(56) References cited:
**EP-A- 0 215 664        EP-A- 0 385 269**
**EP-A- 0 391 670        WO-A-90/05956**

## Description

## BACKGROUND OF THE INVENTION

Field of the Invention

The present invention relates to a method of producing characters and figures by storing data to specify a set of characters of one kind into a memory and by performing processings with the stored data to produce family type faces having forms different from the original characters.

Description of the Related art

In recent years, a variety of type faces have been used in the printing industry. Of a single type face, a number of family type faces are produced, which are different in stroke thicknesses of printing elements of characters, general forms of characters, forms of detailed elements of characters, etc. Such various type faces and their families are used due to differences in use of printed materials, design, body size, etc. of characters printed on the materials as well as difference in printing method.

A conventional method of producing a family type face will be described in the following. Conventionally, a basic type face is designed, and then each of the type faces are manually changed to produce each family type face.

Enormous time and labor are required for manually producing family type faces. The number of processes necessary for inputting the produced family type face into a desk top publishing system, a word processor and the like will be approximately proportional to the number of the produced family type face. Similarly, storage capacity approximately proportional to the number of the produced family type faces will be necessary for storing the family type faces.

Recently, a method utilizing an interpolation technique is used for producing family type faces. In the method, two pieces of data for specifying, for example, a fat character and a lean character by their contour forms are prepared. Mathematical interpolation between the two contours is performed to produce an intermediate character between the two characters.

In the method of producing characters and figures, original data for specifying the contour form of one character/figure includes first data $\beta_1$ including a plurality of coordinates $(Xi, Yi)$ on the contour specifying a first form of the character/figure $\alpha_1$, and second data $\beta_2$ including each displacement $(\delta Xi, \delta Yi)$ between the plurality of coordinates $(Xi, Yi)$ constituting the first data $\beta_1$ and a plurality of coordinates $(X'i, Y'i)$ on the contour of a second form of the character/figure $\alpha_2$ corresponding to the coordinates $(Xi, Yi)$. Original data is stored for every character/figure and coordinates $(X''i, Y''i)$ are found as data $\beta_n$ for specifying a form $\alpha_n$ based on the above first data

$\beta_1$ $(Xi, Yi)$ and the above second data $\beta_2$ $(\delta Xi, \delta Yi)$ in accordance with the following equations;

$$X''i = Xi + K \times \delta Xi$$

$$Y''i = Yi + K \times \delta Yi \qquad (1)$$

(where, K is a constant) or

$$X''i = Xi + F (N) \times \delta Xi$$

$$Y''i = Yi + F (N) \times \delta Yi \qquad (2)$$

(where F (N) is a function taking a variable as magnification N).

The resultant data $\beta_n$ by the above equations is multiplied by magnification N to produce a character/figure having the form $\alpha_n$ and magnified at N magnification as a result.

Further, thus obtained form of the character/figure sometimes requires processing in the following manner. An example will be described in connection with the printing industry.

The term "printing" usually means transferring accurately character information on an original onto an object such as a sheet of paper. However, if an original is transferred with characters of the original type face without modification, the transferred characters might be rounded off at their corners, or get smeary to be difficult to read, depending on the method of transfer (relief printing, intaglio printing, offset printing, screen printing, etc.), characteristics of ink to be used (fluidity and viscosity), and the like.

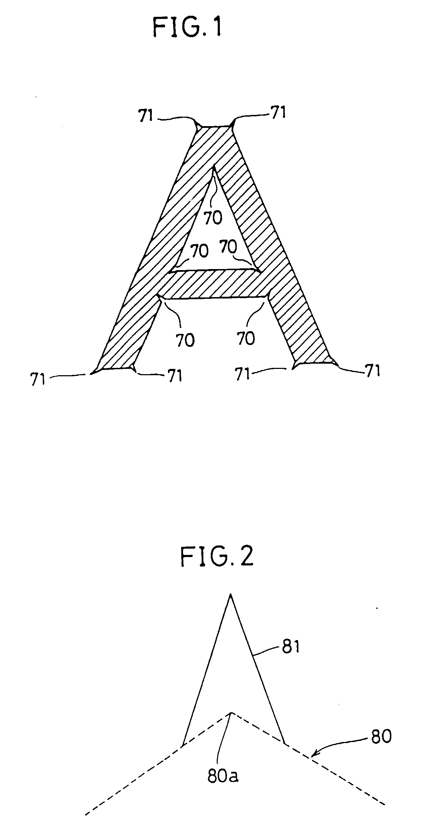

Conventionally, the following steps are therefore performed onto an original to prevent the above-described problems. That is, referring to letter "A" shown in Fig. 1, a notch 70 is provided at a crossing of strokes, and a serif (a light stroke projecting form the stem of a character) 71 is provided at a corner of each element, so that a serif added character is prepared from letter "A". Printing such a serif added character permits the character to be reproduced accurately. As shown in Figs. 1 and 2, in each case of the notch 70 and the serif 71, an inverted V shaped projection 81 is added to the edge 80a of the character contour 80.

Generally, characters and figures as described above are manually modified. That is, a block copy on which a print is based is modified by referring to the state of a printed sample, using a pen, a brush, etc. Since the number of strokes necessary for composing a numeral or an alphabet is limited, original numerals and letters can be modified prior to producing a copy block.

There exist, however, a problem in the conventional method of producing characters and figures as described above, that it is hard to produce a desired character completely without manual labor.

Further, a character with a serif for printing is not easily available in accordance with the conventional method. The serif added character used in phototype setting for preparing a block copy etc. is processed optically. If a serif and a notch are provided to an original character, the serif and the notch themselves are enlarged in accordance with the expansion of the character. Serifs and notches to be added are different in size in accordance with a print or ink to be used. This is the reason why each of a plurality of type faces of one character must be produced as an individual serif added character.

Manual production of a serif added character requires tremendous time and labor. Serifs or notches (referred to simply as "serif" hereinafter) vary in size among producers. The resultant printed materials therefore, end up with various qualities. Furthermore, a number of type faces for printing must be produced in accordance with differences in type face and size. For an illustration of a general method of storing characters see EP-A-0 215 664.

## SUMMARY OF THE INVENTION

It is an object of the present invention to provide a method of producing characters/figures, in which a serif added character can be produced automatically in accordance with the way printing takes place, in order to provide high-quality printed materials faster and more easily.

According to the present invention, a method of producing a character/figure in accordance with the present invention is a method using computer for storing the form of the above-described character into a memory by the coordinates of ends of a straight line and a curve constituting the contour of a character as well as the control points i.e. the midpoints of the curve, and by control point data representing information whether the above control points are set on the ends of the above straight line or the curve, or set on the mid-points of the curve, and for automatically adding a serif, i.e. a light stroke in a projecting shape to the edge of the contour of the above-described character in accordance with operation carried out based on the above control point data, and the method includes the steps of preparing parameters for specifying the form of the serif; taking out one of the control point data from the memory; determining whether a serif should be added to the contour of the character at each of the control points based on the taken out control point data;

producing a set of further control point data representing a new contour added with a serif at the control point in which it is determined that the serif should be added thereto; and

outputting further control point data at the control point in which it is determined that a serif should be added and outputting the control point data taken out from the memory as they are at the control point in which it is not determined it should be added with a serif.

In the method, parameters for specifying the serif are prepared. At each of the control point, it is determined whether a serif should be added to the contour of the character. At the control point in which a serif should be added, further control point data for specifying the form of the serif based on the predetermined parameters is produced and is output in place of the original control point data. At the other control points, the original control point data are output as they are. The character with the serif can be obtained by linking each of the control points based on the output control point data.

In accordance with the method, a serif is automatically produced at each necessary position along the contour of the character, if the parameters for specifying the form of the serif is prepared in advance. Unlike the method of manually modifying a block copy, the present method requires less workload. The shape of the serif is determined by the parameters regardless of the size of the character, and, therefore, the serif can be reproduced accurately. Furthermore, by changing the parameters most appropriate serif added characters can be easily produced in accordance with various type face sizes, ink characteristics, and the like.

The foregoing and other objects, features, aspects and advantages of the present invention will become more apparent from the following detailed description of the present invention when taken in conjunction with the accompanying drawings.

## BRIEF DESCRIPTION Of THE DRAWINGS

Fig. 1 is a schematic diagram showing one example of a serif added character;

Fig. 2 is a schematic diagram showing the form of the serif;

Fig. 3 is a block diagram showing an apparatus for embodying a method in accordance with an embodiment of the present invention;

Fig. 4 is a diagram showing a part (or a polygon) of a character for explaining a variety of control points;

Fig. 5 is a diagram schematically showing a format of tables for storing data representing the form of the character in accordance with the present invention;

Fig. 6 is a schematic diagram showing letter "A" represented as a combination of polygons;

Fig. 7 is a diagram schematically showing the form of a projection set by parameters in the embodiment of the present invention;

Fig. 8 is a diagram showing a principle of vector composition for positioning the peak of a serif at the peak of the contour of a character;

Figs. 9, 10 and 11 are diagrams schematically showing the serif forms when $\alpha > \alpha_1$, $\alpha = \alpha_1$ and $\alpha < \alpha_1$, respectively;

Fig. 12 is a flow chart of a program executed by the CPU 103 in the embodiment of the present invention.

DESCRIPTION OF THE PREFERRED EMBODIMENT

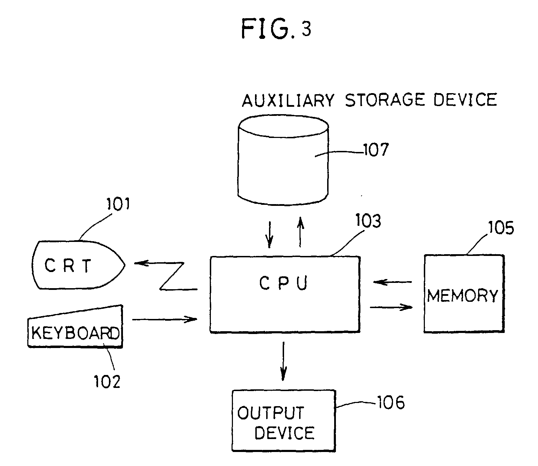

Fig. 3 is a block diagram showing an apparatus for implementing a method of producing a character/figure in accordance with an embodiment of the present invention. Referring to Fig. 3, the apparatus includes a CRT 101, a keyboard 102, a CPU 103 for performing interpolation and overall control of the apparatus, a memory 105 including a character table, a part table, and a control point table which will be touched upon later, an output device 106 including a printer for outputting a resultant character/figure, and an auxiliary storage device 107.

The embodiment of the present invention is a method of transforming the letter form of a given character into the letter form of a serif added character suitable for printing.

An apparatus for implementing the method in accordance with the third embodiment is using the apparatus shown in Fig. 3. In the following, the apparatus shown in Fig. 3 will be referred to.

The auxiliary storage device 107 stores data for specifying the form of a character. The following two methods are generally known for storing the form of a character.

(1) A letter form is stored as bit map data.
(2) A letter form is stored as a plurality of control points for defining the contour line of a character.

The second method can be divided into the following three methods.

(a) A method of producing a contour approximating to an original letter form by linking the control points by straight lines.
(b) A method of producing a contour approximating to an original letter form by linking the control points by straight lines and circular arcs.
(c) A method of producing a contour approximating to an original letter form by linking the control points by straight lines and curve (of quadratic spline, cubic spline, Bezier, etc).

In accordance with the method (1), the letter form of the character is represented by information indicating in what state each of blocks disposed in a matrix (for example, 24 x 24) is, i.e. whether in a white state or a black state. The information does not include information representing how the contour of the character is. On the other hand, the production of a "serif added character", to which the present embodiment is directed, characteristics of the contour of the character play especially a significant role. It is therefore not only inappropriate to apply the method (1) to the present invention but also difficult to do so.

Among the three methods (a) to (c) of the method (2), the method (c) is most appropriate for the present invention. As will be apparent from the following description, data representing the contour of an original letter form is replaced by data representing the form of "serif", and, therefore, the method (c) is most advantageous, considering the readiness of processing, and small storage capacity required.

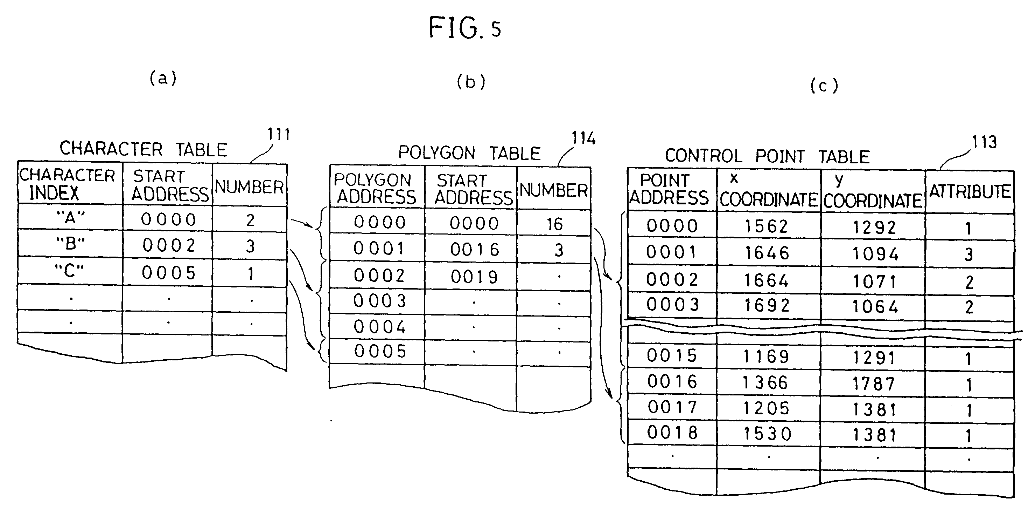

Fig. 5 shows a data table for storing the form of a character stored in the auxiliary storage device 107. Referring to Fig. 5, the auxiliary storage device 107 includes a character table 111 for storing information for specifying the character by the address of a character code allotted to the character; a polygon table 114 for storing information related to one or a plurality pieces of polygons constituting one character; and a control point table 113 for storing information related to control points for displaying the contours of the polygons stored in the polygon table.

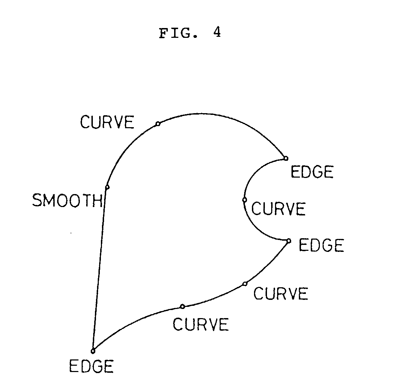

A polygon is a closed contour line with no end constituting one character. Control points (three or more) are provided at the ends of a straight line, the ends of a curve and the intermediate points of a curve which constitute one polygon. For example, a figure shown in Fig. 4 is one polygon, and eight control points are provided on the contour line.

Each of the control points is provided with an attribute as described in the second embodiment. The control points are classified into, for example, three types such as "curve", "edge" and "smooth". There will be no detailed description thereof, because each type is already disclosed in the above.

Referring to Fig. 5, data for specifying the form of a character is stored into the character table 111, the polygon table 114, and the control point table 113 in accordance with the following format.

Referring to Fig. 5 (a), the character table 111 stores, in the order of the character codes allotted to each of the character, information on the number of polygons constituting a certain character, and a start address indicating in which address data for specifying the forms of the polygons is stored in the polygon table 114.

The polygon table 114 stores for every polygon, in the order of the polygon addresses each allotted to the polygons, the number of control points for defining the contour of a polygon, and a start address indicating in which address data related to each control point is stored in the control point table 113. Data related to a plurality of polygons constituting one character is stored in serial addresses in the polygon table.

The control point table 113 stores control point data representing the position, the attributes, etc. of each control point in positions determined by control point addresses each allotted to the control points. The control point data includes x coordinate and y coordinate of the control point and information indicating to which of the above-described "curve", "edge" and "smooth" the type of the control point belongs to.

An appropriate manner of determining the range of coordinates has been already described in conjunction with the second embodiment. The arguments in the second embodiment can also be applied to the third embodiment.

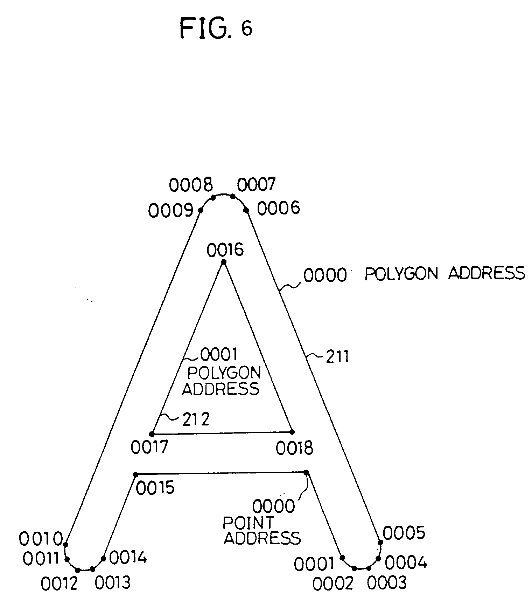

Fig. 6 is a diagram showing an example of representing a letter by polygons. Referring to Fig. 6, the letter "A" includes two polygons 211 and 212.

On the polygon 211 provided are control points 0000 to 0015 and on the polygon 212 provided are control points 0016 to 0018.

Data for specifying the form of the letter "A" is shown in Fig. 5. It can be understood from the position where character index = "A" in Fig. 5 (a) that the letter "A" is formed of two polygons, and data for specifying the form of the polygons is stored in a region starting from polygon address 0000 of the polygon table 114.

Referring to Fig. 5(b), it can be understood from the polygon address 0000 of the polygon table 114 that sixteen control points are provided on the first polygon 211, and the control point data is stored in sixteen addresses starting from address 0000 of the control point table 113 shown in Fig. 5(c). Similarly, it can be understood from information stored in the polygon address 0001 of the polygon table 114, that three control points are provided on the second polygon 212, and the control point data is stored in addresses 0016 to 0018 of the control point table 113 shown in Fig. 5(c).

The coordinates of each control point and the type thereof can be understood from information stored in each address of the control point table 113. Each polygon is restored by linking the control points set on one polygon taking the type into account. By restoring all the polygons constituting one character, the form of the character can be defined by the outermost contour.

A serif added character is produced as will be described below.

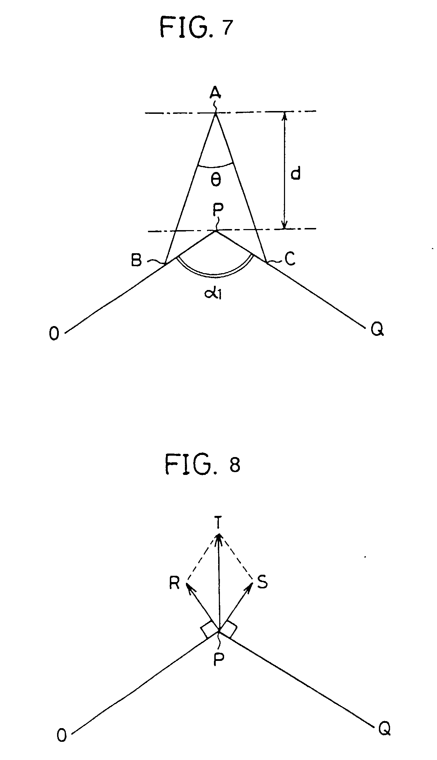

(1) An outline of the form of a serif is shown in Fig. 7. In Fig. 7, a folded line BAC represents the form of the serif to be added to the contour BPC of an original character. The serif is added to the obtuse angle side of the corner.

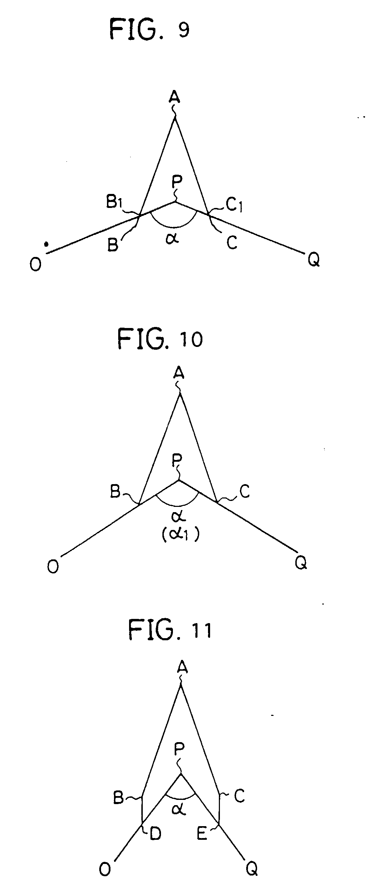

A peak angle $\theta$ and a length d shown in Fig. 22 are previously provided as parameters to the CPU 103 through a keyboard 102 (see Fig. 11) and are stored into a memory 105. The peak angle $\theta$ is an angle formed by the contour BAC of the serif, and the length d is defined by the distance between the peak point A of the serif and the peak point P of the contour OPQ of the character.

Similarly, an operator inputs to the memory 105 a threshold value $\alpha_1$ and a maximum value $\alpha_2$ of an angle formed by the contour at the peak point P using the keyboard 102. The threshold value $\alpha_1$ will be a reference value in determining which of three types the serif is formed into, in the serif producing process described in the following. The three types of serif forms are shown in Figs. 9 to 11, showing the cases in which the peak angle $\alpha$ of of the vertex P is represented by $\alpha > \alpha_1$, $\alpha = \alpha_1$, and $\alpha < \alpha_1$, respectively. The maximum angle $\alpha_2$ is a reference in determining whether a serif should be added to the peak point P or not.

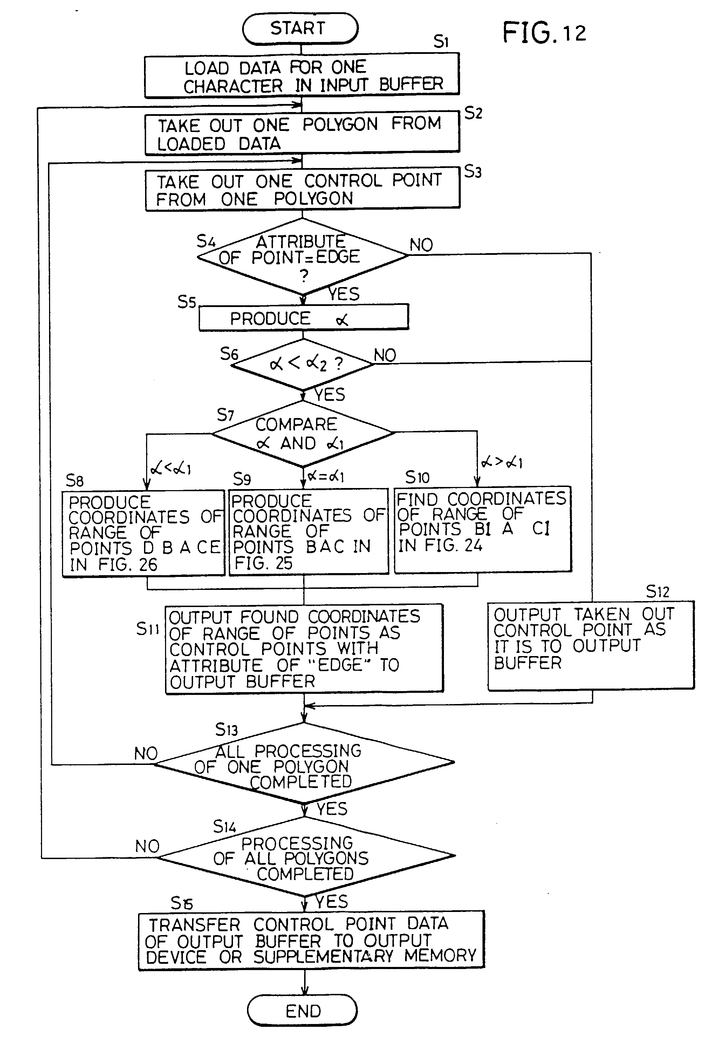

(2) Execution of a program having a control structure shown in Fig. 12 by the CPU 103 (see Fig. 3) is initiated.

(3) In step S1, control point data for one character is read out from the auxiliary storage device 107 and is loaded into the input buffer of the memory 105.

(4) In step S2, only the control point data belonging to one certain polygon is selected from the control point data loaded into the input buffer.

(5) In step S3, one piece of the selected control point data is selected and is applied to the CPU 103.

(6) In step S4, it is determined whether the value representing the type of the selected control point data is "1" or not, i.e. the control point is of "edge type" or not. If the result of the determination is NO, the control proceeds to step S12, and if not, the control proceeds to step S5.

(7) In step S5, the peak angle $\alpha$ of the contour at the control point is produced. The peak angle $\alpha$ is defined by an angle formed by a tangent vector at the control point between two curves "stitched together" at the control point.

(8) In step S6, is determined if the value of the found peak angle $\alpha$ is smaller than the maximum value $\alpha_2$. If the result of the determination is NO, the control proceeds to step S12, else the control passes to step S7.

(9) In step S7, comparison is conducted between the peak angle $\alpha$ and the threshold value $\alpha_1$, and the control is branched into the following three paths depending upon the result.

(a) If $\alpha < \alpha_1$, the control proceeds to step S8. In step S8, the coordinates of the range of points DBACE in Fig. 26 are found. The points A, B and C are each determined by the originally input parameters. When two straight lines each parallel to the vector AP from the points B and C are drawn, the respective straight lines cross the sides OP, PQ at the points D and E, respectively. The control subsequently proceeds to step S11.

(b) If $\alpha = \alpha_1$, the control proceeds to step S9. In step S9, the coordinates of the range of points BAC shown in Fig. 25 are found. The control then proceeds to step S11.

(c) If $\alpha > \alpha_1$, the control proceeds to step S9. In step S9, the coordinates of points $B_1$, A and $C_1$ shown in Fig. 24 are found. In Fig. 24, the points A, B and C are determined by the input parameters. The points $B_1$ and $C_1$ are the intersection of the side OP and a segment AB, and the intersection of the side PQ and a segment AC, respectively. The control then proceeds to step S11.

(10) The position of the peak point A of the serif will be determined as follows. Referring to Fig. 8, unit vectors $\vec{PS}$ and $\vec{PR}$ are found at the control point P, the vectors normal to two curves on the both sides of the point P, respectively. The composition of the vectors $\vec{PS}$, $\vec{PR}$ permits a vector $\vec{PT}$ to be obtained. The point A is found as a point at a distance d from the point P on the vector $\vec{PT}$ or on the prolongation thereof. The points B and C are determined in accordance with the input parameters θ using the points A and P as reference.

(11) In step S11, the coordinates of the found range of points are output to an output buffer as control point data having the attribute "edge". The control then proceeds to step S13.

(12) If the control proceeds to step S12 based upon the determinations in steps S4 and S6, it is not necessary to add a serif to the contour in step S12, and, therefore, the control point data taken out from the input buffer is output to the output buffer as it is.

(13) In step S13, it is determined whether the processing of all the control points of a polygon currently undergoing processing is completed or not. If the result of determination is YES, the control proceeds to step S14, and, if not, control will return to step 3. In the latter case, the above described processing is performed onto the next control point data.

(14) In step S14, it is determined whether all the polygons of the character currently undergoing processing is completed or not. If the result of the determination is YES, the control proceeds to step S15, else the control will return to step S2. If the control returns to step S2, processing as to the next polygon is initiated.

(15) In step S15, data from one character stored in the output buffer is transferred to the output device 106 or 101, and the letter form defined by the data will be printed or displayed, because the formation of the new letter form as to the designated character is completed. Alternatively, data related to a newly produced serif added character is transferred to the auxiliary storage device 107 and prepared for later use.

As described above, in accordance with the method of third embodiment, previously input parameters (peak angle θ, length d, threshold value $\alpha_1$, maximum value $\alpha_2$ for determining the form of a serif, a character provided with a serif necessary for each character can be readily produced. In contrast to the method of manually modifying a character as practiced conventionally, necessary time and labor involved are greatly reduced. The form of a serif to be produced is determined into one in accordance with the input parameters. It is, therefore, possible to reproduce the serif accurately, thereby improving the quality of printed materials. By changing the parameters, the form of a character to be produced can be easily changed, and therefore, various kinds of serif added characters can be readily produced in accordance with printing methods, ink characteristics, the type faces of characters, the sizes of characters, etc., thereby facilitating the provision of most appropriate serif added characters.

Although in the embodiments, the cases were employed in which the form of the serif is an inverted V type, the other forms maybe employed.

In case a serif added character blacked out is desired, a technique disclosed in the above-mentioned Japanese Patent Laying-Open No. 61-208172 can be advantageously used.

Although the present invention has been described and illustrated in detail, it is clearly understood that the same is by way of illustration and example only and is not to be taken by way of limitation.

**Claims**

1. A method of producing a character/figure using computer for adding a serif to an edge of the contour of said character by storing the form of said character into a memory in the form of the coordinates of control points and control point data, said control points including ends of a straight line and a curve and a midpoint of a curve constituting the contour of said character, said control point data including information indicating for each of said control points whether said control point is set to said end of the straight line or the curve or set to the midpoint of the curve, said method comprising the steps of:

   preparing parameters for specifying the form of said serif;
   taking out one of said plurality of control point data from said memory;
   determining whether said serif should be added to the contour of said character or not at the control point based on the taken out control point data;
   producing a set of further control point data representing a new contour added with said serif at the control point at which said serif should be added; and
   outputting said further control point data at the control point in which it is determined that said serif should be added, and outputting the control point data taken out from said memory as it is at the control point in which it is not determined that said serif should be added.

2. The method of producing the character/figure in accordance with claim 1, wherein

said determining step comprises detecting whether the control point corresponding to said taken out control point data is disposed at a corner of the contour of said character based upon said taken out control point data, and determining that said serif is not to be added in response to the detection of said control point not representing the corner.

3. The method of producing the character/figure in accordance with claim 1 or 2, wherein

said determining step further comprises the steps of:

detecting an acute angle formed at said control point by two curves linked at said control point in response to the detection of said control point being disposed at the corner;

detecting whether said detected acute angle is smaller than a predetermined angle or not;

determining to perform the addition of said serif, in response to the detection of said acute angle being smaller than the predetermined angle, and wherein

the step of producing a set of said further control point data comprises:

the step of producing a set of further control point data for specifying said serif form on the side opposite to the direction in which said acute angle is formed at said contour adjacent to said control point.

4. The method of producing the character/figure in accordance with one of the claims 1 to 3, wherein

the step of producing a set of said further control point data comprises the steps of;

determining the direction of the formation of the peak of the serif at said control point taking said control point as a reference;

specifying the peak of the serif having a predetermined distance apart from said control point in the direction of the formation of said peak; and

determining a new contour linking the specified peak of said serif and two curves of straight lines linked at said control point based on said parameters, taking the specified peak point of said serif and said control point as reference.

5. The method of producing the character/figure in accordance with claim 4, wherein

the step of determining the direction of the formation of the peak point of said serif comprises the steps of:

finding two normal vectors of predetermined lengths to said acute angle side at said control point of the two curves or straight lines linked at said control point; and

finding a composite vector starting from said control point by composing said found two normal vectors to determine said peak point on said composite vector or the prolongation thereof.

6. The method of producing the character/figure in accordance with claim 5, wherein the step of determining said new contour comprises the steps of:

forming two segments from the peak point of said serif in the direction toward said control point, said two segments forming a predetermined angle with said composite vector and of predetermined lengths;

comparing the acute angle formed by the contour at said control point and an angle of a predetermined degree; and

selecting one of predetermined three forms of serifs in response to the result of said comparison.

**Patentansprüche**

1. Verfahren zum Erzeugen von Zeichen und Figuren mit einem Rechner, um eine Serife einer Ecke der Kontur des Zeichens hinzuzufügen, indem die Zeichenform in einem Speicher in Form der Koordinaten von Steuerpunkten und Steuerpunktdaten gespeichert wird, wobei die Steuerpunktdaten Endpunkte einer die Kontur des Zeichens bildenden geraden Linie und Endpunkte und einen Mittelpunkt einer die Kontur bildenden Kurve, und Information enthalten, die für jeden Steuerpunkt angibt, ob der Steuerpunkt an den Enden der geraden Linie oder der Kurve oder dem mittleren Punkt der Kurve liegt, wobei das Verfahren folgende Schritte aufweist:

es werden Parameter vorbereitet, die die Form der Serife kennzeichnen;

ein Datenposten aus den vielen Steuerpunktdaten wird dem Speicher entnommen;

es wird ermittelt, ob die Serife der Kontur des Zeichens am Steuerpunkt hinzugefügt werden soll oder nicht, basierend auf den aus dem Speicher genommenen Steuerpunktdaten;

ein Satz weiterer Steuerpunktdaten wird erzeugt, die eine neue Kontur darstellen, der die Serife an dem Steuerpunkt, an dem sie hinzugefügt werden soll, hinzugefügt ist; und

diese weiteren Steuerpunktdaten werden für den Steuerpunkt, für den ermittelt wurde, daß die Serife hinzugefügt werden soll, ausgegeben und die dem Speicher entnommenen unveränderten Steuerpunktdaten werden für denjenigen Steuerpunkt ausgegeben, für den ermittelt wurde, daß keine Serife hinzugefügt werden soll.

2. Verfahren zur Erzeugung von Zeichen und Figuren nach Anspruch 1, bei dem der Ermittlungsschritt erfaßt, ob der aus dem Speicher entnommenen Steuerpunktdaten entsprechende Steuerpunkt an einer Ecke der Kontur des Zeichens liegt, basierend auf den dem Speicher entnommenen Steuerpunktdaten, und bestimmt, daß die Serife nicht hinzugefügt werden soll, wenn erfaßt wurde, daß der Steuerpunkt nicht auf der Ecke liegt.

3. Verfahren zur Erzeugung von Zeichen und Figuren nach Anspruch 1 oder 2, bei dem der Ermittlungsschritt weiterhin folgende Schritte aufweist:

   die Erfassung eines am Steuerpunkt durch zwei am Steuerpunkt verbundene Kurven gebildeten spitzen Winkels in Reaktion auf die Erfassung, daß der Steuerpunkt an der Ecke liegt;
   die Erfassung, ob der erfaßte spitze Winkel kleiner als ein vorgegebener Winkel ist oder nicht;
   das Hinzufügen der Serife wird in Reaktion darauf bestimmt, daß erfaßt wurde, daß der spitze Winkel kleiner als der vorgegebene Winkel ist, wobei
   der Schritt, der den Satz weiterer Steuerpunktdaten erzeugt, aufweist:
   die Erzeugung eines Satzes weiterer Steuerpunktdaten erzeugt, die die Serifenform auf der Seite kennzeichnen, die der Richtung, in der der spitze Winkel an der Kontur neben dem Steuerpunkt gebildet ist, entgegengesetzt ist.

4. Verfahren zur Erzeugung von Zeichen und Figuren nach einem der Ansprüche 1 bis 3, bei dem Schritt, der den Satz weiterer Steuerpunktdaten erzeugt, Schritte aufweist, die die Richtung der Ausbildung des Scheitels der Serife am Steuerpunkt festlegen, wobei der Steuerpunkt als Referenz genommen wird, den Scheitel der Serife in einem vorgegebenen Abstand vom Steuerpunkt in Richtung der Ausbildung des Scheitelpunkts kennzeichnen, und

   basierend auf den Parametern unter Verwendung des gekennzeichneten Scheitelpunkts der Serife und des Steuerpunkts als Referenz eine neue Kontur ermitteln, die den gekennzeichneten Scheitel der Serife und zwei Kurven gerader Linien verbindet, die am Steuerpunkt verbunden sind .

5. Verfahren zur Erzeugung von Zeichen und Figuren nach Anspruch 4, bei dem der Schritt, der die Richtung der Ausbildung des Scheitelpunkts der Serife bestimmt, folgende Schritte aufweist:

   für die zwei Kurven oder geraden Linien, die am Steuerpunkt verbunden sind, werden zwei Normalvektoren vorgegebener Länge auf der Seite des spitzen Winkels am Steuerpunkt und ein Summenvektor bestimmt, der vom Steuerpunkt ausgeht, indem die ermittelten beiden Normalvektoren zusammengesetzt werden, um den Scheitelpunkt auf dem Summenvektor oder dessen Verlängerung zu bestimmen.

6. Verfahren zur Erzeugung von Zeichen und Figuren nach Anspruch 5, bei dem der Schritt, der die neue Kontur ermittelt, folgende Schritte aufweist:

   vom Scheitelpunkt der Serife werden in der Richtung zum Steuerpunkt hin zwei Segmente gebildet, die einen vorgegebenen Winkel mit dem Summenvektor bilden und eine vorgegebenen Länge haben;
   der von der Kontur am Steuerpunkt gebildete spitze Winkel und ein Winkel vorgegebener Größe werden verglichen, und
   eine von drei vorgegebenen Serifenformen wird übereinstimmend mit dem Vergleichsergebnis ausgewählt.

## Revendications

1. Procédé pour produire un caractère/une figure en utilisant un ordinateur pour ajouter un empattement à un bord du contour dudit caractère par mémorisation de la forme dudit caractère dans une mémoire sous la forme des coordonnées de points de commande et de données de points de commande, lesdits points de commande incluant des extrémités d'une droite et d'une courbe et un point médian d'une courbe constituant le contour dudit caractère, lesdites données de points de commande comprenant une information indiquant, pour chacun desdits points de commande, si ledit point de commande est positionné sur ladite extrémité de la droite ou de la courbe ou est positionné au point médian de la courbe, ledit procédé comprenant les étapes consistant à :

   préparer des paramètres pour spécifier la forme dudit empattement;
   prélever une donnée parmi ladite pluralité de données de points de commande dans ladite mémoire;
   déterminer si ledit empattement doit être ajouté au contour dudit caractère ou non au niveau du point de commande sur la base des données de point de commande prélevées;
   produire un ensemble d'autres données de point de commande représentant un nouveau contour auquel est ajouté ledit empattement au niveau du point de commande, au niveau duquel ledit empattement doit être ajouté; et délivrer lesdites autres données de point de commande au niveau du point de commande, pour lequel il est établi que ledit empattement doit être ajouté, et délivrer les données de point de commande prélevées de ladite mémoire telles quelles au niveau du point de commande pour lequel il n'est pas établi que ledit empattement doit être ajouté.

2. Procédé pour produire le caractère/la figure dans la revendication 1, selon lequel

ladite étape de détermination comprend la détection du fait que le point de commande correspondant auxdites données de point de commande prélevées est situé ou non au niveau d'un coin du contour dudit caractère sur la base desdites données de point de commande prélevées, et
déterminer le fait que ledit empattement n'est pas ajouté en réponse à la détection dudit point de commande ne représentant pas le coin.

3. Procédé pour produire le caractère/la figure selon la revendication 1 ou 2, dans lequel

ladite étape de détermination comprend en outre les étapes consistant à :
détecter un angle aigu formé au niveau dudit point de commande par deux courbes réunies au niveau dudit point de commande en réponse à la détection dudit point de commande comme étant situé au niveau dudit coin;
détecter si ledit angle aigu détecté est inférieur à un angle prédéterminé, ou non;
déterminer qu'il faut effectuer l'addition dudit empattement en réponse à la détection dudit angle aigu comme étant inférieur à l'angle prédéterminé; et
dans lequel
l'étape consistant à produire un ensemble desdites autres données de point de commande comprend :
l'étape consistant à produire un ensemble d'autres données de point de commande pour spécifier ladite forme d'empattement sur le côté opposé à la direction dans laquelle ledit angle aigu est formé au niveau dudit contour adjacent audit point de commande.

4. Procédé pour produire le caractère/la figure selon l'une des revendications 1 à 3, dans lequel

l'étape consistant à produire un ensemble desdites autres données de point de commande comprend les étapes consistant à :
déterminer la direction de la formation du pic de l'empattement au niveau dudit point de commande en prenant ledit point de commande comme référence;
spécifier le pic de l'empattement possédant une distance prédéterminée par rapport audit point de commande dans la direction de la formation dudit pic; et
déterminer un nouveau contour reliant le pic spécifié dudit empattement et deux courbes ou droites reliées au niveau dudit point de commande sur la base desdits paramètres, en prenant le point de pic spécifié dudit empattement et ledit point de commande en tant que référence.

5. Procédé pour produire le caractère/la figure selon la revendication 4, dans lequel

l'étape consistant à déterminer la direction de formation du point de pic dudit empattement comprend les étapes consistant à :
trouver deux vecteurs normaux ayant des longueurs prédéterminées pour ledit côté d'angle aigu au niveau dudit point de commande des deux courbes ou droites réunies au niveau dudit point de commande; et
trouver un vecteur composite partant dudit point de commande en composant lesdits deux vecteurs normaux trouvés pour déterminer ledit point de pic sur ledit vecteur composite ou son prolongement.

6. Procédé pour produire le caractère/la figure selon la revendication 5, dans lequel l'étape consistant à déterminer ledit nouveau contour comprend les étapes consistant à :

former deux segments à partir du point de pic dudit empattement dans la direction tournée vers ledit point de commande, lesdits deux segments faisant un angle prédéterminé avec ledit vecteur composite et possédant des longueurs prédéterminées;
comparer l'angle aigu formé par le contour au niveau dudit point de commande et un angle d'une valeur prédéterminée en degrés; et
sélectionner l'une de trois formes prédéterminés d'empattements en réponse au résultat de ladite comparaison.

## FIG. 1

## FIG. 2

# FIG. 3

AUXILIARY STORAGE DEVICE

107

101

CRT

KEYBOARD

102

103

CPU

105

MEMORY

106

OUTPUT DEVICE

FIG. 4

# FIG. 5

(a)       (b)       (c)

## CHARACTER TABLE 111

| CHARACTER INDEX | START ADDRESS | NUMBER |
|---|---|---|
| "A" | 0000 | 2 |
| "B" | 0002 | 3 |
| "C" | 0005 | 1 |
| . | . | . |
| . | . | . |

## POLYGON TABLE 114

| POLYGON ADDRESS | START ADDRESS | NUMBER |
|---|---|---|
| 0000 | 0000 | 16 |
| 0001 | 0016 | 3 |
| 0002 | 0019 | . |
| 0003 | . | . |
| 0004 | . | . |
| 0005 | . | . |

## CONTROL POINT TABLE 113

| POINT ADDRESS | x COORDINATE | y COORDINATE | ATTRIBUTE |
|---|---|---|---|
| 0000 | 1562 | 1292 | 1 |
| 0001 | 1646 | 1094 | 3 |
| 0002 | 1664 | 1071 | 2 |
| 0003 | 1692 | 1064 | 2 |
| 0015 | 1169 | 1291 | 1 |
| 0016 | 1366 | 1787 | 1 |
| 0017 | 1205 | 1381 | 1 |
| 0018 | 1530 | 1381 | 1 |
| . | . | . | . |

## FIG. 6

# FIG. 7

# FIG. 8

FIG. 9

FIG. 10

FIG. 11

# FIG. 12

```
           START
                              S1
   LOAD DATA FOR ONE
   CHARACTER IN INPUT BUFFER

                              S2
   TAKE OUT ONE POLYGON FROM
   LOADED DATA

                              S3
   TAKE OUT ONE CONTROL POINT
   FROM ONE POLYGON

   S4      ATTRIBUTE          NO
        OF POINT=EDGE
            ?
             │ YES
   S5
        PRODUCE  α

   S6                         NO
        α < α₂ ?
             │ YES
   S7      COMPARE
         α AND α₁
   α<α₁         α=α₁         α>α₁
   S8           S9           S10
   PRODUCE      PRODUCE      FIND COORDINATES
   COORDINATES OF COORDINATES OF OF RANGE OF
   RANGE OF     RANGE OF     POINTS B1 A C1
   POINTS D B A C E POINTS B A C IN IN FIG. 24
   IN FIG. 26   FIG. 25

                                        S12
   S11 OUTPUT FOUND COORDINATES   OUTPUT TAKEN OUT
       OF RANGE OF POINTS AS      CONTROL POINT AS
       CONTROL POINTS WITH        IT IS TO OUTPUT
       ATTRIBUTE OF "EDGE" TO     BUFFER
       OUTPUT BUFFER

   S13
   NO    ALL PROCESSING
       OF ONE POLYGON
         COMPLETED
             │ YES
   S14
   NO    PROCESSING
       OF ALL POLYGONS
         COMPLETED
             │ YES
   S15
   TRANSFER CONTROL POINT DATA
   OF OUTPUT BUFFER TO OUTPUT
   DEVICE OR SUPPLEMENTARY MEMORY

           END
```

$\alpha < \alpha_2$ ?

$\alpha < \alpha_1$

$\alpha = \alpha_1$

$\alpha > \alpha_1$